# EUROPEAN PATENT APPLICATION

(11) **EP 4 293 955 A1**
(43) Date of publication of application: **20.12.2023**
(21) Application number: 22178845.8
(22) Date of filing: 14.06.2022
(51) Int. Cl.: H04L 9/40, G06T 17/00, H04L 9/00

(54) **ACCESS CONTROL TO A COMPUTER-SIMULATED COMPONENT IN A COMPUTER-SIMULATED ENVIRONMENT**

(71) Applicant: Siemens Aktiengesellschaft, 80333 München (DE)
(72) Inventor: Singh, Saurabh Narayan, 81739 München (DE); Sauer, Markus, 81739 München (DE)
(74) Representative: Siemens Patent Attorneys

(57) **Abstract**

The invention provides a system for controlling access to a computer-simulated component, e.g., a metaverse component, that is connected to a computer-simulated environment, e.g., a metaverse, the system comprising:
a) the computer-simulated environment (CE), wherein the computer-simulated environment
- represents a 3D environment,
- is accessible by a user,
and
- comprises at least one interface for connecting a computer-simulated component to the computer-simulated environment,

b) at least one computer-simulated component representing a physical component, wherein the computer-simulated component is connected to the computer-simulated environment via the at least one interface,
c) an access control unit configured to set component-specific access rules (R1) for accessing the at least one computer-simulated component by the user and to grant or deny access to the user for accessing the at least one computer-simulated component according to the component-specific access rules,
and
d) a hosting environment (HE) hosting the computer-simulated environment (CE) and/or the at least one computer-simulated component (CC).

## Description

The present invention relates to a system, computer-implemented method, and a computer program product for controlling access to a computer-simulated component that is connected to a computer-simulated environment.

Virtual reality and computer-simulated environments are representations of real/physical environments. With faster processors, internet connections and advent of the idea of connecting multiple virtual realities, the concept of "metaverse" has been developed. The metaverse signifies, at its core, a virtual digital simulation of a real world. It can be used for gaming, trainings, modelling, design, meetings, and many other industrial applications. Most metaverses are being designed to be centralized in the perspective of hosting content, and control of participation. However, users and/or creators need to be able to control their part of the metaverse and have higher granularity of access control, privacy and transparency over the content they create as part of the metaverse.

It is therefore an objective of the present invention to enable access control for participation in such a computer-simulated environment.

The object is solved by the features of the independent claims. The dependent claims contain further developments of the invention.

The invention provides according to the first aspect a system for controlling access to a computer-simulated component that is connected to a computer-simulated environment, the system comprising:
a) the computer-simulated environment, wherein the computer-simulated environment
   - represents a 3D environment,
   - is accessible by a user,
      and
   - comprises at least one interface for connecting a computer-simulated component to the computer-simulated environment,
b) at least one computer-simulated component representing a physical component, wherein the computer-simulated component is connected to the computer-simulated environment via the at least one interface,
c) an access control unit configured to provide component-specific access rules for accessing the at least one computer-simulated component by the user and to grant or deny access to the user for accessing the at least one computer-simulated component according to the component-specific access rules,
   and
d) a hosting environment hosting the computer-simulated environment and/or the at least one computer-simulated component.

A computer-simulated environment can for example be understood as a three-dimensional (3D) representation of a real or physical world. It can be understood as a virtual world. The computer-simulated environment is in particular accessible by a user, i.e., it is accessible from the real/physical world. This comprises preferably data exchange between the computer-simulated environment and the real/physical world. In particular, the computer-simulated environment can be understood as the metaverse. It is also possible to interact with the computer-simulated environment, i.e., to influence or use processes, components and/or functions in the computer-simulated environment. Therefore, processes in the computer-simulated environment may have direct influence on processes in the real/physical world, e.g., by modelling control processes virtually.

For example, it is possible that a user can access the computer-simulated environment via an interface, e.g., a virtual reality (VR) or augmented reality (AR) interface. The counterpart of the computer-simulated environment does not necessarily have to exist but can be for example a 3D model. It is also possible that physical forces and phenomena, e.g., gravity, are represented in a different way in the computer-simulated environment than in the real world, e.g., gravitational acceleration.

A computer-simulated component can for example be understood as a representation, in particular a 3D representation, of a real or physical component. A component can for example be a room, a building, an item, or an object. The computer-simulated component can have different functionalities/features, e.g., an access interface. The computer-simulated component further comprises data that are component-specific, e.g., sensor data of a virtual sensor, that can be retrieved for example via the access interface. An access to a computer-simulated component can for example comprise usage, modification, connection to other computer-simulated components, etc. The computer-simulated component can interact with the computer-simulated environment. To this end, the computer-simulated component can be connected to the computer-simulated environment.

A hosting environment can for example be implemented as a cloud environment, an edge-cloud environment and/or on specific devices, e.g., mobile devices.

It is an advantage of the present invention that an owner of a computer-simulated component can control access to the computer-simulated component and/or its data since each computer-simulated component can be hosted by the individual owner. The access control is managed by the access control unit. Therefore, each participant in a metaverse can create and operate his/her own metaverse components. The invention provides the necessary flexibility to create dynamic, collaborative metaverses. There is a higher granular support regarding access control and privacy of each component which is highly beneficial for industries.

According to a first embodiment, the system may further comprise an ownership control unit configured to provide component-specific ownership rights for modifying the computer-simulated component, and to allow modification of the computer-simulated component by a user according to the component-specific ownership rights.

For example, the ownership control unit provides a mechanism to control manipulation, copying etc. of the computer-simulated component.

According to a further embodiment, the access control unit may be further configured to provide environment-specific access rules for connecting a computer-simulated component with the computer-simulated environment, and to allow or deny connecting the computer-simulated component to the computer-simulated environment according to the environment-specific access rules.

To this end, when connecting of a computer-simulated component, the computer-simulated component must fulfil the environment-specific rules. The environment-specific rules can for example comprise connection requirements for a computer-simulated component.

According to a further embodiment, the environment-specific access rules may comprise a prioritization rule for prioritizing connection of several computer-simulated components with the computer-simulated environment.

According to a further embodiment, the computer-simulated environment may be connected to a blockchain network, and the access control unit is realized as a smart contract.

Therefore, the admission and/or leaving procedures and/or storage of a computer-simulated component is realized in a smart contract, that is executed by nodes of the blockchain network. The smart contract may execute automatically according to triggering events, such that the state of the metaverse regarding participating computer-simulated components is managed in a way that it cannot be manipulated.

According to a further embodiment, the computer-simulated environment may be distributed across and may be hosted by at least two hosting environments.

Therefore, the computer-simulated environment can be realized in a distributed manner. For example, the hosting environment can be distributed across different owners'/participants' devices or other hosting environments. It is possible to realize a spatial split of the metaverse across the hosting environments. Furthermore, the metaverse data, functions, and/or processes can be shared across different hosting environments. The metaverse can then only be operated if all participants agree to stay active with their hosting environments supporting the jointly composed metaverse.

According to a further embodiment an ownership of the computer-simulated environment may be decentralized.

Therefore, the ownership of the metaverse is not assigned to a single entity. Instead, a decentralized ownership is realized, e.g., via blockchain technology. Therefore, no single entity can control and coordinate the metaverse.

According to a further embodiment, the 3D environment may represent a physical environment.

The invention provides according to a second aspect a computer-implemented method for controlling access to a computer-simulated component that is connected to a computer-simulated environment, wherein the computer-simulated environment represents a 3D environment, is accessible by a user, and comprises at least one interface for connecting a computer-simulated component to the computer-simulated environment, wherein the computer simulated component represents a physical component,
wherein the computer-simulated component and/or the computer-simulated environment are hosted by a hosting environment, comprising the method steps:
- connecting at least one computer-simulated component to the computer-simulated environment via the at least one interface,
- providing component-specific access rules for accessing the at least one computer-simulated component,
   and
- granting or denying access to a user for accessing the at least one computer-simulated component according to the component-specific access rules.

According to an embodiment, the computer-implemented method may further comprise the steps:
- requesting access to the computer-simulated environment for connecting the computer-simulated component to the computer-simulated environment,
- reading in environment-specific access rules for connecting a computer-simulated component with the computer-simulated environment,
   and
- allowing or denying connecting the computer-simulated component to the computer-simulated environment according to the environment-specific access rules.

According to another embodiment the computer-implemented method may further comprise the steps:
- reconfiguring the component-specific access rules for accessing the at least one computer-simulated component,
   and
- removing the connection of the at least one computer-simulated component from the computer-simulated environment.

In addition, a computer program product (non-transitory computer readable storage medium having instructions, which when executed by a processor, perform actions) having program instructions for performing the aforementioned methods according to embodiments of the invention is claimed, wherein one of the methods according to embodiments of the invention, all of the methods according to embodiments of the invention or a combination of the methods according to embodiments of the invention is performable by means of the computer program product each time.

The invention will be explained in more detail by reference to the accompanying figures.
- Fig. 1:: a first exemplary embodiment of the system according to the invention;
- Fig. 2:: a second exemplary embodiment of the system according to the invention;
- Fig. 3:: a first exemplary embodiment of the computer-implemented method according to the invention; and
- Fig. 4:: a second exemplary embodiment of the computer-implemented method according to the invention.

Equivalent parts in the different figures are labeled with the same reference signs.

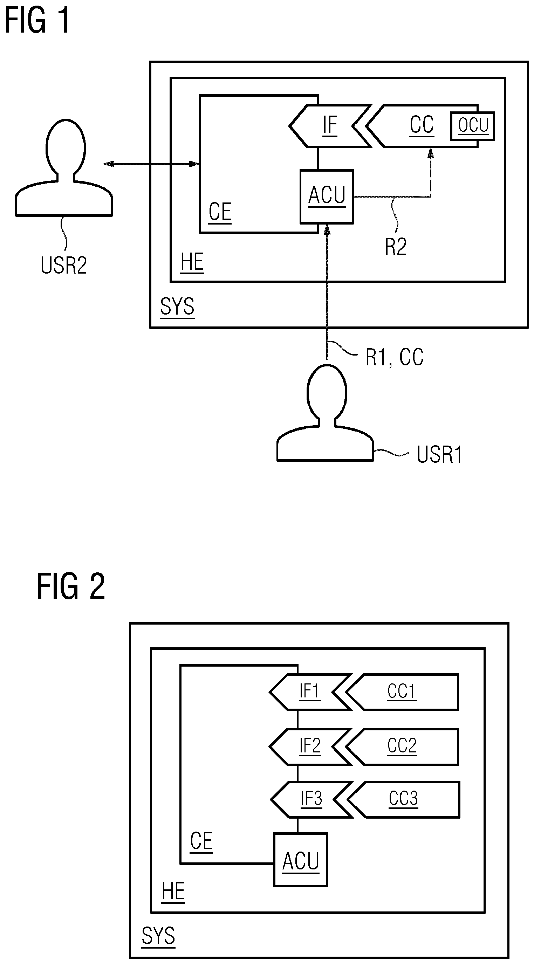

Figure 1 shows a first embodiment of a system SYS for controlling access to a computer-simulated component CC that is connected to a computer-simulated environment CE.

The system SYS comprises the computer-simulated environment CE, at least one computer-simulated component CC, an access control unit ACU, and a hosting environment HE.

The computer-simulated environment represents a 3D environment, preferably a physical or real world. For example, the computer-simulated environment CE can be understood as a metaverse. For example, the computer-simulated environment CE can represent an empty building. The computer-simulated environment is accessible by a user USR1, USR2, e.g., via a VR or AR interface or a data connection. The computer-simulated environment comprises at least one interface IF that is configured to connect a computer-simulated component to the computer-simulated environment. Both, the computer-simulated environment and the computer-simulated component, do not necessarily have to correspond to existing real-world objects.

A computer-simulated component CC represents a physical component. For example, it is a digital counterpart of a real-world item. It can be for example an equipment or a room for the empty building. The computer-simulated component CC is connected to the computer-simulated environment CE via the interface IF. The connection comprises a data communication. For example, the computer-simulated component CC can be a virtual sensor that can be integrated in the 3D representation of the building, providing virtual sensor data, e.g., temperature, of the virtual building. In other words, the connection of the computer-simulated component CC to the metaverse CE allows a joint computer-simulation that is accessible by a user USR1, USR2.

The computer-simulated environment CE and/or the computer-simulated component CC are hosted in the hosting environment HE, that can be for example a cloud environment. It is also possible that the computer-simulated environment CE is distributed across and hosted by at least two hosting environments. Also, an ownership of the computer-simulated environment CE can be realized in a decentralized manner.

The access control unit ACU is configured to provide component-specific access rules R1 for accessing the at least one computer-simulated component by a user USR2. Preferably, a first user/the owner USR1 provides the computer-simulated component CC and defines access rules/conditions R1 for accessing the computer-simulated component CC. The access control unit ACU manages the access rules R1 and performs the test of the rules. The access control unit ACU is therefore further configured to grant or deny access to at least one second user USR2 for accessing the computer-simulated component CC according to the component-specific access rules R1 that are defined by the first user/owner USR1.

The access control unit ACU can be further configured to provide environment-specific access rules R2 for connecting the computer-simulated component CC with the computer-simulated environment CE. The access control unit ACU checks whether the computer-simulated component CC is allowed to be connected to the computer-simulated environment according to the environment-specific access rules R2. The environment-specific access rules R2 can comprise a prioritization rule for prioritizing connection of several computer-simulated components with the computer-simulated environment.

The access control unit ACU is preferably shared between the computer-simulated environment CE and the hosting environment HE. Therefore, it can be hosted in the hosting environment HE. Information about the computer-simulated components hosted in the hosting environment HE can be saved in the access control unit ACU, such that the computer-simulated environment can have access to this information.

The access control units ACU can also be realized as a smart contract. In this case, the computer-simulated environment is preferably connected to a blockchain network and the access control unit ACU is realized as the smart contract, executed by nodes of the blockchain network.

The system SYS can further comprise an ownership control unit OCU configured to provide component-specific ownership rights for modifying the computer-simulated component, and to allow modification of the computer-simulated component by a user according to the component-specific ownership rights. Preferably, the ownership control unit OCU is linked or connected to the respective computer-simulated component.

Figure 2 shows another exemplary embodiment of a system SYS for controlling access to a computer-simulated component CC that is connected to a computer-simulated environment CE.

The computer-simulated environment CE preferably comprises a plurality of interfaces IF1, IF2, IF3 that are configured to connect computer-simulated components CC1, CC2, CC3 with the computer-simulated environment CE. The access control unit ACU provides access control management according to owner-defined access rules for accessing individual computer-simulated components CC1, CC2, CC3 by another user.

The computer-simulated environment CE can be understood as a metaverse. The system SYS provides a method to control content and contribution to the metaverse. Each owner/participant can host their own computer-simulated component CC1-CC3, i.e., their own metaverse content, and when needed, can provide access and/or share the content with other participating entities and/or contribute to a temporary collaborative metaverse. When an access is no longer required, a user can revoke access from other users. The access control management is performed by the access control unit ACU.

The metaverse components CC1-CC3 can be for example virtual reality environment designs like different rooms, buildings, cities etc. and/or virtual reality objects, like a screwdriver or a drill or a car, which interacts with the environment CE and/or complete the environment created and/or owned by a participant and/or any other assets, behaviours, functions, capabilities owned by a participant. To this end, the metaverse components CC1-CC3 can also be connected with each other.

The access control unit ACU can be configured by each owner of the component to allow and deny access to other participants. The access control unit ACU therefore performs a check, whether a participant requesting access to a metaverse component, meets the conditions defined by the according access rules.

As a first step, the computer-simulated environment/the metaverse CE is created. To this end, a user creates a new metaverse CE in the hosting environment HE. Furthermore, environment-specific access rules for accessing the metaverse CE are defined and provided to the access control unit ACU. Therefore, initially, the metaverse CE exists as a single/first component in the hosting environment HE. The metaverse CE can be for example an empty building with flexibility to create own room designs, as an example of the environment-specific access rules. Optionally, the owner of the newly created metaverse CE can use e.g., a registry, discovery service, or notification service to announce the availability of the new metaverse CE.

In a next step, computer-simulated components/metaverse components CC1-CC3 can be connected to the metaverse CE. To this end, each owner of the respective metaverse component CC1-CC3 configures the access control unit ACU and sets relevant access rules for accessing the respective component. These component-specific access rules need to be compatible with the environment-specific access rules. If a metaverse component complies with the environment-specific access rules, the metaverse CE confirms the connection and the component hosted in the hosting environment HE can join the metaverse CE. Depending on the individual component-specific access rules, various users of the metaverse can gain access to the new metaverse component.

For example, the metaverse component CC1 can be a VR-based training centre hosted in one of the rooms of the metaverse CE. In such a scenario a reception module as another metaverse component CC2 can provide an authorization function to access the VR-based training. For example, a visual representation of locked doors in-between rooms can reflect the technical function of the metaverse component CC2 in the metaverse CE, such that participants must authorize themselves via this metaverse component CC2 inside the composed metaverse.

The metaverse CE can have a plurality of integration interfaces IF1-IF3 and can integrate many metaverse components. It is also possible, that the connection to the metaverse CE can be allocated based on a defined priority. For example, based on user interest in different metaverse components or other measurable parameters, the environment-specific access rules can prioritize which components can participate in case of limited number of interfaces.

When a user wants to remove a metaverse component and/or wants to remove access to the metaverse component, the user reconfigures the component-specific access rules in the access control unit ACU accordingly. Two scenarios are possible: 1. Abrupt closure: This is a high-risk option, where a user can withdraw control even if some users are currently using the metaverse component. This option should be invoked only in case of emergencies. 2. Announced closure: Here, the user announces its intention to remove the component from the metaverse CE. The information is broadcasted to all the participants who are currently using the component. The information also contains the time after which the component will be removed. Now the users have an option to save their progress and leave before the component is closed.

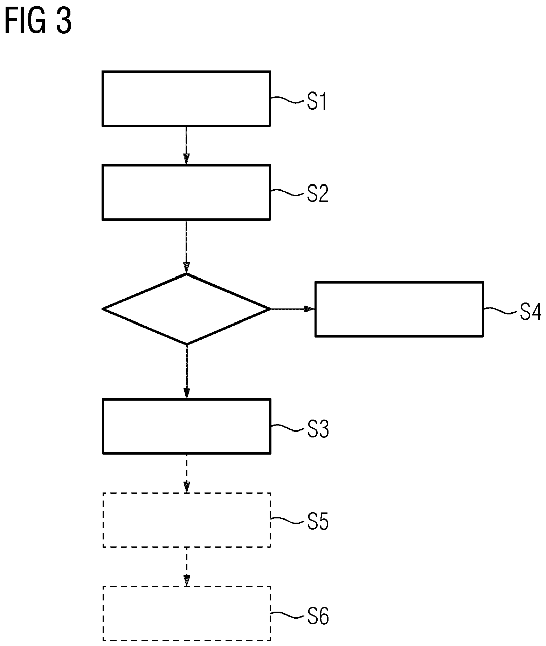

Figure 3 shows an exemplary embodiment of a computer-implemented method for controlling access to a computer-simulated component that is connected to a computer-simulated environment. The computer-simulated environment represents a 3D environment. It is accessible by at least one user and it comprises at least one interface for connecting a computer-simulated component to the computer-simulated environment, wherein the computer simulated component represents a physical component. The computer-simulated component and/or the computer-simulated environment are hosted by a hosting environment.

The method comprises the following steps:
In a first step S1, at least one computer-simulated component is connected to the computer-simulated environment via the at least one interface. Preferably, the computer-simulated component complies with predefined environment-specific access rules for connecting to the computer-simulated environment.

In the next step S2 component-specific access rules are set by the user. The component-specific access rules comprise conditions for accessing the at least one computer-simulated component.

In the next step, a second user can request access to the computer-simulated component. Then, it is checked whether the second user fulfils the component-specific access rules. Depending on the check result, access is granted, step S3, or denied, S4, to the second user and the second user can then access the computer-simulated component.

If the first user wants to revoke access to the computer-simulated component, the component-specific access rules can be reconfigured accordingly, step S5. Afterwards, step S6, the connection of the computer-simulated component can be removed from the computer-simulated environment.

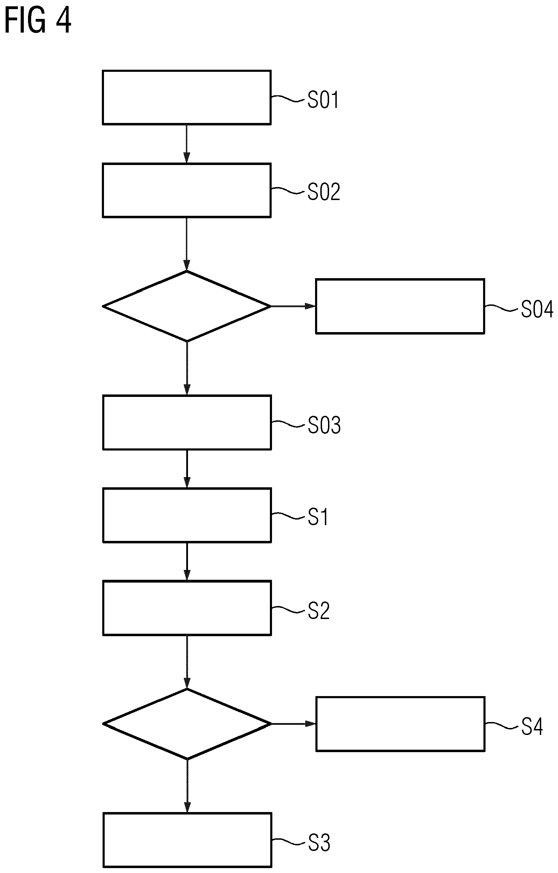

Figure 4 shows another exemplary embodiment of a computer-implemented method for controlling access to a computer-simulated component that is connectable to a computer-simulated environment. In addition to the method steps as shown in Figure 3, the method can comprise the following preceding steps:
First, step S01, an access request can be sent by a user/owner to the computer-simulated environment for connecting the computer-simulated component to the computer-simulated environment.

Then, step S02, predefined environment-specific access rules can be received, that define connection criteria for connecting a computer-simulated component with the computer-simulated environment.

Then, component-specific characteristics or features are checked against the environment-specific access rules and depending on the check result, the connection of the computer-simulated component to the computer-simulated environment is allowed, step S03, or denied, step S04. Component-specific characteristics can relate for example to connectivity, technical capabilities, compatibility with the computer-simulated environment etc.

When the connection of the computer-simulated component to the computer-simulated environment is approved, the computer-simulated component is connected to the computer-simulated environment, step S1.

All of the described and/or drawn features as shown by the embodiments can be advantageously combined within the scope of the invention.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. System (SYS) for controlling access to a computer-simulated component that is connected to a computer-simulated environment,
the system (SYS) comprising:
a) the computer-simulated environment (CE), wherein the computer-simulated environment
- represents a 3D environment,
- is accessible by a user,
and
- comprises at least one interface (IF) for connecting a computer-simulated component to the computer-simulated environment,
b) at least one computer-simulated component (CC, CC1, CC2, CC3) representing a physical component, wherein the computer-simulated component is connected to the computer-simulated environment via the at least one interface,
c) an access control unit (ACU) configured to provide component-specific access rules (R1) for accessing the at least one computer-simulated component by the user and to grant or deny access to the user for accessing the at least one computer-simulated component according to the component-specific access rules,
and
d) a hosting environment (HE) hosting the computer-simulated environment (CE) and/or the at least one computer-simulated component (CC).

2. System according to claim 1, further comprising an ownership control unit (OCU) configured to provide component-specific ownership rights for modifying the computer-simulated component, and to allow modification of the computer-simulated component by a user according to the component-specific ownership rights.

3. System according to claim 1 or 2, wherein the access control unit (ACU) is further configured to provide environment-specific access rules (R2) for connecting a computer-simulated component with the computer-simulated environment, and to allow or deny connecting the computer-simulated component to the computer-simulated environment according to the environment-specific access rules.

4. System according to claim 3, wherein the environment-specific access rules comprise a prioritization rule for prioritizing connection of several computer-simulated components with the computer-simulated environment.

5. System according to one of the preceding claims, wherein the computer-simulated environment (CE) is connected to a blockchain network, and the access control unit (ACU) is realized as a smart contract.

6. System according to one of the preceding claims, wherein the computer-simulated environment is distributed across and hosted by at least two hosting environments.

7. System according to one of the preceding claims, wherein an ownership of the computer-simulated environment is decentralized.

8. System according to one of the preceding claims, wherein the 3D environment represents a physical environment.

9. Computer-implemented method for controlling access to a computer-simulated component that is connected to a computer-simulated environment,
wherein the computer-simulated environment represents a 3D environment, is accessible by a user, and comprises at least one interface for connecting a computer-simulated component to the computer-simulated environment,
wherein the computer simulated component represents a physical component,
wherein the computer-simulated component and/or the computer-simulated environment are hosted by a hosting environment, comprising the method steps:
- connecting (S1) at least one computer-simulated component to the computer-simulated environment via the at least one interface,
- setting (S2) component-specific access rules for accessing the at least one computer-simulated component,
and
- granting (S3) or denying (S4) access to a user for accessing the at least one computer-simulated component according to the component-specific access rules.

10. Computer-implemented method according to claim 9, further comprising the steps:
- requesting (S01) access to the computer-simulated environment for connecting the computer-simulated component to the computer-simulated environment,
- reading (S02) in environment-specific access rules (R2) for connecting a computer-simulated component with the computer-simulated environment,
and
- allowing (S03) or denying (S04) connecting the computer-simulated component to the computer-simulated environment according to the environment-specific access rules.

11. Computer-implemented method according to claims 9 or 10, further comprising the steps:
- reconfiguring (S5) the component-specific access rules for accessing the at least one computer-simulated component,
and
- removing (S6) the connection of the at least one computer-simulated component from the computer-simulated environment.

12. Computer program product directly loadable into the internal memory of a digital computer, comprising software code portions for performing the method steps of one of the claims 9 to 11 when said computer program product is run on a computer.
